(19) **Europäisches Patentamt**
**European Patent Office**
**Office européen des brevets**

(11) **EP 1 077 011 B1**

(12) **EUROPEAN PATENT SPECIFICATION**

(45) Date of publication and mention
of the grant of the patent:
**23.01.2008 Bulletin 2008/04**

(51) Int Cl.:
***H04Q 7/38*** (2006.01)

(21) Application number: **99927043.2**

(86) International application number:
**PCT/SE1999/000783**

(22) Date of filing: **10.05.1999**

(87) International publication number:
**WO 1999/059370 (18.11.1999 Gazette 1999/46)**

(54) **A METHOD IN A TELECOMMUNICATION SYSTEM FOR REDUCING THE SIGNALLING LOAD WHEN PAGING A MOBILE STATION**

VERFAHREN ZUR REDUZIERUNG DER SIGNALISIERUNGSLAST BEIM RUFEN EINER MOBILSTATION IN EINEM TELEKOMMUNIKATIONSSYSTEM

PROCEDE CONCERNANT UN SYSTEME DE TELECOMMUNICATION ET PERMETTANT DE REDUIRE LA CHARGE DE SIGNALISATION LORS DE LA RECHERCHE D'UNE STATION MOBILE

(84) Designated Contracting States:
**DE DK ES FI FR GB IT SE**

(30) Priority: **11.05.1998 SE 9801621**

(43) Date of publication of application:
**21.02.2001 Bulletin 2001/08**

(73) Proprietor: **TeliaSonera AB**
**106 63 Stockholm (SE)**

(72) Inventors:
• **ANDERSIN, Michael**
**S-118 64 Stockholm (SE)**

• **AYOUB, Souhad**
**S-141 55 Huddinge (SE)**

(74) Representative: **Hopfgarten, Nils**
**L.A. Groth & Co. KB**
**P.O. Box 6107**
**102 32 Stockholm (SE)**

(56) References cited:
**WO-A-97/37504**  **WO-A1-94/13114**
**WO-A1-98/59516**  **WO-A2-95/28063**
**WO-A2-96/01030**  **US-A- 5 590 398**

**Description**

FIELD OF THE INVENTION

The present invention relates to a method at a cellular digital mobile telephone system to reduce the signalling load at location of mobile stations.

BACKGROUND OF THE TECHNOLOGY

In a cellular mobile system it is very important that the network has possibiliy to locate the mobile stations in order to connect incoming calls to, or establish data connections with, them. Location Management (LM) is the name of the procedure which makes possible for the network to keep a check on where in the network a mobile station is. We must here not forget that the mobiles are mobile in the system, which makes the problem complicated. The procedure for Location Management requires signalling over radio, which means that a certain part of the capacity in a cellular system is needed for this type of signalling. For that reason Location Management must be optimised so that the extremely limited radio resource can be used for speech and data traffic.

The strategy for Location Management is a compromise between the signalling in up respective downlink. The signalling in downlink is made by "paging" (search), which is a signalling message which the network transmits to search for a mobile within a limited area, so called Paging Area (PA). A PA consists of one or more cells. The uplink signalling is made up of messages from the mobile which now and then tells the network where it is. Updating of the position of the mobile is made at change of "Location Area" (LA) and the procedure is called "Location Area Update" (LU) .

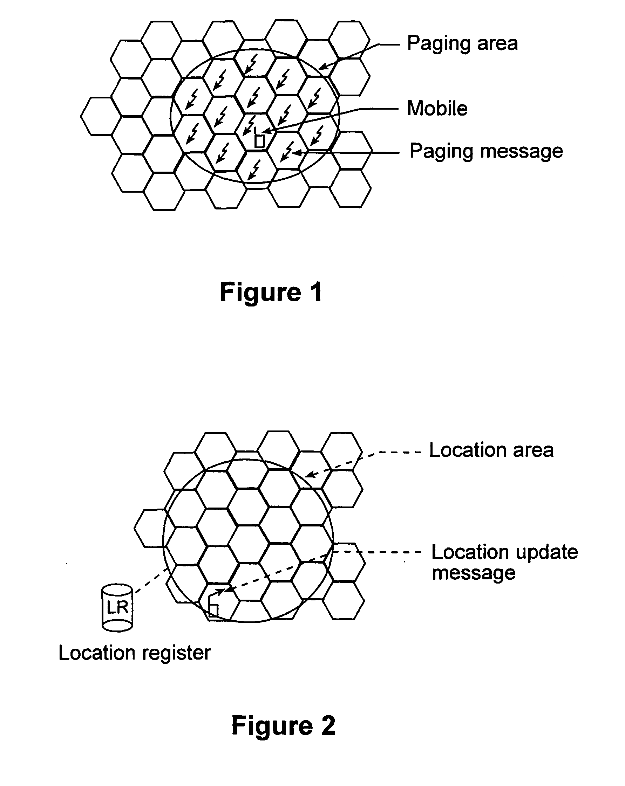

The signalling load depends on signalling for "Paging" and signalling for Location Updating. Figure 1 shows the paging messages which are transmitted to all cells in a PA, whereas Figure 2 shows LU-messages which the mobile transmits to inform the network about its position.

The network must in addition include a register where information about in which LA the mobile is, a so called Location Register (LR).

To find out whether the prior art states any optimisation of Location Management, a preliminary investigation was performed, at which the following documents were found:

D1: US, A 5 590 398
D2: US, A 5 548 816
D3: WO, A1, 97/24 898
D4: WO, A1, 97/03 529
D5: WO, A1, 94/07 337
D6: WO, A1, 93/23 965

Document 1 (D1) describes a cellular communications system where existing "Location Areas" (LA) can be completed with personal LAs which can consist of one or more cells. When a mobile is searched for, paging signals in proper order are transmitted to different LAs depending on in which probability the mobile is regarded to be there, by a sequential procedure.

Document 2 (D2) describes a method and a system to locate a mobile in a cellular communications system. To each mobile a number of cells are allocated which constitute a virtual "Location Area" (LA). The search for the mobile can be made either by a paging message being transmitted in the whole LA, or sequentially to the cells one by one.

Document 3 (D3) describes a cellular communications system where a"Location Register" (LR) which covers several "Location Areas" can be divided into several "Logical VLRs". At paging a paging message is first transmitted in the part of LVLR where the mobile latest was active.

Document 4 (D4) describes a cellular communications system where, if the mobile unit cannot be reached with a message, a "location confirming signal is transmitted in cells in descending order or priority in the paging area".

Document 5 (D5) describes updating of position in a cellular communications system. According to the description, a "Temporary Paging Area" (TPA) can be defined if the mobile is in the same cell for a certain time. TPA can consist of one or more cells. At search for the mobile, the system starts with TPA and the proceeds to next higher level if the mobile has not been found.

In document 6 (D6) a service area is divided into three hierarchical levels; location area, paging area and service area. Search for the mobile starts in location area and proceeds up in the hierarchy if it is not found.

None of these documents describes an optimising procedure which utilises GPRS.

WO 97 37504 discloses a method for reducing the signalling load in a cellular digital mobile telephone system at the location of a mobile station in a location area, when the mobile station is in a standby mode and hence connected to the base station. The mobile telephone system utilizes GPRS so that radio resources can be utilized in an efficient way.

WO 96 01030 relates to subscriber paging control in a mobile communication system. The base stations of the mobile communication system are arranged according to their traffic load into paging groups with different priorities, so that base stations with a traffic load level lower than a predetermined threshold value have a higher priority in the selection of base stations for transmitting a paging message han base stations with a traffic load level higher than the threshold value.

The aim of the present invention is to further reduce the signalling load at the sacrifice of time delay at data connection setup.

SUMMARY OF THE INVENTION

The above mentioned aim is achieved by a method at a cellular digital mobile telephone system to reduce the signalling load when locating a mobile station in a routing area at the sacrifice of a time delay at the setup of a data connection, said mobile telephone system utilizing GPRS telephony to reduce the paging load at location of said mobile station, characterized in that said routing area is divided into any number of smaller paging areas, and in that a paging message is transmitted sequentially in said paging areas by a GPRS-controlled base station until said mobile station responds to said paging message, said GPRS-controlled base station randomly searching through paging areas included in said routing area for said mobile station.

By the utilisation of GPRS, the radio channel is utilised more efficient. GPRS is especially adapted to non-real time services and consequently it is very suitable for interactive data services.

According to an advantageous embodiment of the method according to the invention the base station which transmits the paging message is controlled by a GPRS-node (SGSN) for utilizing the radio channel more efficient because the GPRS-node only utilizes the radio channel when it has information to transmit.

Other advantageous embodiments of the invention are described in the dependent claims.

BRIEF DESCRIPTION OF THE DRAWINGS

In the following a detailed description of an implementation of the invention is given with reference to the enclosed drawings, of which:

Figure 1 relates to "paging" according to prior art;
Figure 2 relates to "location update" according to prior art;
Figure 3 is a state diagram for GPRS;
Figure 4 shows the system architecture for GPRS according to the invention;
Figure 5 shows schematically the division of "routing area" in "paging areas" according to the invention.

DETAILED DESCRIPTION OF AN EMBODIMENT OF THE INVENTION

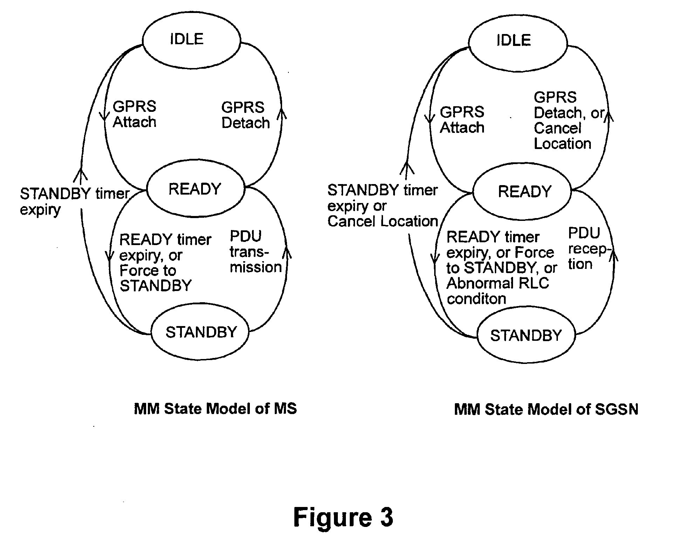

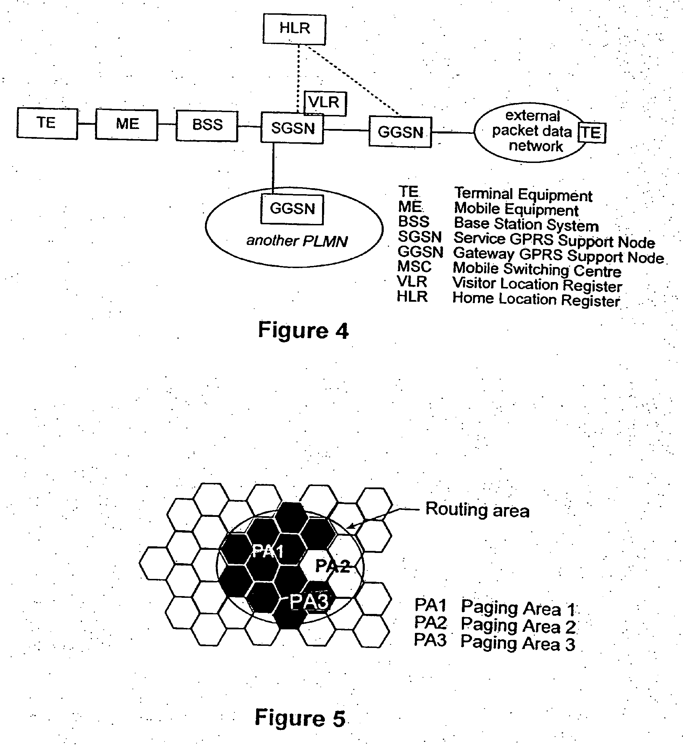

The mobile telephone system according to the invention is based on the GPRS-standard, which briefly will be described with reference to the Figures 3 and 4. After that the procedure, according the invention, to divide a " routing area" into just any number of "paging areas" which are sequentially searched through by the network to find called mobile station, is described.

In the future the GSM-system will, by the introduction of General Packet Radio Service (GPRS), be in a position to offer packet switched services in contrast to the circuit switched services of today. GPRS is a cost efficient service in the sense that a GPRS-mobile utilises the radio channel only when it has data to transmit or receive.

GPRS is based on three states "Idle state", "ready state" and "Standby state", as can be seen in Figure 3. In all states can be seen different operations for handling of Location Management. In "Idle state" the mobile is not connected to the network, and the network does not know where the mobile is. On the other hand, in "Ready state" and "Standby state", the mobile can receive paging messages and make updatings of its position (see Figure 3).

A new feature in GPRS is that LM is based on a classification of the mobiles in three classes, depending on which state the mobiles are in. All mobiles which are in state "Idle" are not connected to GPRS LM, whereas mobiles which are in the "Ready" and "Standby" states are connected to GPRS LM. Mobiles which are in "Ready" make use of an LA and PA which are just as big as a cell. In "Ready" the concept Cell update (CU) is defined. All mobiles which are in "Standby" make use of LA and PA which consists of several cells. In the "Standby" state, LA is called Routing Area (RA), and "Location Area Updating" is called "Routing Area Updating" (RAU).

In "Idle mode" neither RAU (Routing Area Update), CU (Cell Update) nor paging is made. The network does not know where the mobile is, and neither tries to search for it. When the mobile is in the "Ready" state, and when it changes cell, it makes a CU if the cells belong to the same Routing Area. If the new cell, which the mobile moves into, belongs to another Routing Area, the mobile transmits a CU combined with a Routing Area Update (RAU). In "Standby mode" only Routing Area Update (RAU) is made as soon as the mobile changes Routing Area. Of interest to mention is that a corresponding state diagram exists in the network which keeps a check on in which state the mobile is.

According to GPRS-standard, GPRS-system architecture consists of two new service nodes, namely SGSN (Support GPRS Service Node) and GGSN (Gateway GPRS Service Node), see Figure 4. To SGSN belongs a VLR (Visitor Location Register) where the position of the mobile is stored. VLR contains latest updated cell numbers and present routing area and GGSN-identity. In HLR there is information about in which SGSN each specific mobile is. The signalling load depends on signalling as a consequence of paging, RAU and CU. This will have as a consequence that the signaling load in a GPRS-system depends on the size of Routing Area and on the timer time between the "Ready" and "Standby" state. The signalling load can be optimised by means of right parameter setting of the size of different RA-areas and the value of the timer time. This Location Management principle, however, can be further improved. The services which GPRS will offer are to a great extent non-real time services (data services) which can stand more delay than real time services. At the set up of a data connection the initial delay (where i.a. the time to search for a mobile is included) is not as critical as the delay during the running session itself. It then will be possible to utilise this to create a more efficient paging mechanism which is described next. The idea behind the present invention is to divide an RA (Routing Area) in smaller PAs (Paging Areas) and search for the mobile in these areas sequentially (according to some procedure) until the mobile is found. Of course one wants as small an initial delay as possible, at the same time as one achieves an efficient signalling. The adjusting between the delay to find a mobile and at the same time achieve an efficient signalling is determined by the operator whose configuration of the algorithm below is reflected by his/her demands on quality and capacity in his/her network. The maximal size of a PA can be supposed to be equal to RA (i.e. conventional GPRS LM). The smallest size of a PA is a cell.

An example of division of an RA into a number of different PAs (see Figure 5) is that an RA is divided into three paging areas, PA1, PA2 and PA3. When the network searches for the mobile in RA, searching is first made in PA1. If no response is obtained, the mobile is searched for in PA2 (or PA3) and so on, until the mobile is found.

A simple calculation of the gain of such a division according to Figure 5 is achieved in the following. We suppose that the probability that the mobile is in a cell is equally distributed over all cells. Then we will have the following:

- According to traditional GPRS LM we shall transmit a paging message in all 14 cells in Figure 5. This will result in 14 paging messages in all. The delay will be one step in a sequential paging process.
- At a division of RA in three PAs consisting of 8, 3 respective 3 cells the following is obtained. The average of the total number of transmitted paging messages is

$$8 \times \frac{8}{14} + 11 \times \frac{3}{14} + 14 \times \frac{3}{14} = 9,9 \text{ paging messages}$$

The maximal delay is 3 steps in a sequential paging process. The average delay is

$$1 \times \frac{8}{14} + 2 \times \frac{3}{14} + 3 \times \frac{3}{14} = 1,64 \text{ steps in a paging}$$
$$\text{process if we search in order PA1, PA2, PA3}$$

The conclusion is that we will gain 14-9,9 = 4,1 paging messages on an average. The average delay will be two steps if the selection regarding which order PA is selected is arbitrarily and equally distributed. In the example above, it is and advantage to search in PA1 first because the probability is greatest to find the mobile in this. If we divide the RA-area in the example above in 14 different PAs, the average of the total number of transmitted paging messages = 7,5 paging messages, which implies a reduction of 14-7,5= 6,5 paging messages. The maximum delay, however, is as much as 14 steps in a sequential paging process and the average delay will be 7,5 steps.

The present invention consequently relates to divide an RA (Routing Area) in a number of smaller areas, so called Paging Areas (PA), as can be seen in figure 5. Paging is made sequentially, i.e. the network searches for the mobile in one PA at a time. If the mobile is not found in one PA-area, the mobile is searched for in the next and so on until the mobile is responding to the paging message.

The method can be divided into two main parts which we will discuss below:

1. Division of RA in PA-areas.
2. The searching process.

Division of a Routing Area in Paging Areas

- A PA consists of one or more cells. The cells in a PA may, but need not necessarily, be neighbours to each other.
- The PA-areas may (but need not) be of different sizes and contain different numbers of cells. A PA can for instance be a subset of another PA. The different PAs also can overlap each other.
- For each RA there should be a possibility of having a belonging parameter which tells how many PAs that are included in this RA. This parameter should be possible to set by the operator. For example can the size of RA and the traffic density in the area be used to determine these parameters (for each RA). Which cells that shall be included in a certain specific PA also should be possible to determine by the operator. This can be made, based on, for instance, a geographical division or depending on the traffic amount in each cell.
- The division can be based on collected statistics taken for each mobile, different groupings of mobiles, or for all mobiles in a certain area.
- The division can be made

  - per mobile, i.e. each mobile has its own individual division of each RA (which however requires a lot of memory in the network), or
  - per mobile group, where the users have been divided into different mobility groups, or
  - in common, so that it concerns all mobiles in the network (the most probable).

- The division can be time dependent, i.e. it can be updated after a certain time period according to some algorithm, or time constant.

Searching procedures

- The selection of which PA/PAs in which to search for a certain mobile in the different steps in the sequential paging procedure can be made either randomly or according to a priority list.
- The priority list can be set dependent on, for instance, traffic statistics taken from RA, PAs, or their cells. The priority list can be common to all mobiles, or one may have one for each group of mobiles, or individual (as above), where the first alternative is the most probable at an implementation. Further, the priority list can, for instance, be dependent on latest position updating for each mobile.
- The idea with the priority list is to try to search for the mobile in the PA/PAs in which there is/are the greatest probability/probabilities to find the mobile. It can be based on collected statistics, taken from each mobile, different groupings of mobiles, or all mobiles in a certain area.
- The priority list can be updated dynamically (during operation) according to some algorithm, or be time constant.
- The search procedure can be made in steps directly after each other, or with a certain time delay, between two after each other recurrent searches.
- It should be possible to select between sequential searching and complete searching.

The above stated is only to be regarded as an advantageous embodiment, and the extent of protection of the invention is only limited by what is stated in the subsequent patent claims.

**Claims**

**1.** Method at a cellular digital mobile telephone system to reduce the signalling load when locating a mobile station in a routing area (RA) at the sacrifice of time delay at the setup of a data connection, said mobile telephone system utilising GPRS-technology, **characterized in that** said routing area (RA) is divided into any number of smaller paging areas (PA), and **in that** a paging message is transmitted sequentially in said paging areas by a GPRS-controlled base station until said mobile station responds to said paging message, said GPRS-controlled base station randomly searching through paging areas (PA) included in said routing area (RA) for said mobile station.

**2.** Method according to claim 1,
**characterised in that** the base station (BSS) which transmits said paging message is controlled by a GPRS-node (SGSN) for utilizing the radio channel more efficient because the GPRS-node only utilizes the radio channel when it has information to transmit.

3.  Method according to claim 1 or 2,
    **characterised in that** said paging area includes one or more cells, said cells being placed at any cell distance from each other.

4.  Method according to any of the preceding claims, **characterised in that** said paging area (PA) can be a subset of another paging area (PA), or said paging areas can overlap each other.

5.  Method according to any of the preceding claims, **characterised in that** cells which shall be included in specific paging area (PA) are determined by an operator on the basis of geographical division, or depending on the amount of traffic in each cell.

6.  Method according to any of the preceding claims, **characterised in that** said division of the routing area in paging areas can be based on

    (i) collected statistics taken for each mobile station;
    (ii) different groupings of mobile stations; or
    (iii) all mobile stations within a predefined area.

7.  Method according to claim 6, **characterised in that** said division is time dependent, i.e. it is changed after a certain time period according to an algorithm.

**Patentansprüche**

1.  Verfahren bei einem digitalen Mobiltelefonsystem, um die Signalisierungslast, wenn eine mobile Station in einem Routingbereich (RA) lokalisiert wird, zu reduzieren auf Kosten einer Zeitverzögerung beim Errichten einer Datenverbindung, wobei das Mobiltalefonsystem die GPRS-Technologie verwendet, **dadurch gekennzeichnet, dass** der Routingbereich (RA) in irgendeine Anzahl von kleineren Rufzonen (PA) unterteilt wird und dass eine Rufnachricht sequentiell in den Rufzonen durch eine GPRS-gesteuerte Basisstation übertragen wird bis die mobile Station auf die Rufnachricht antwortet, wobei die GPRS-gesteuerte Basisstation zufällig die Rufzonen (PA), die in dem Routingbereich (RA) enthalten sind, nach der mobilen Station durchsucht.

2.  Verfahren nach Anspruch 1, **dadurch gekennzeichnet, dass** die Basisstation (BSS), die die Rufnachricht überträgt, von einem GPRS-Knoten (SGSN) gesteuert wird für das effizientere Verwenden des Funkkanals, da der GPRS-Knoten nur den Funkknoten verwendet, wenn er zu übertragende Informationen hat.

3.  Verfahren nach Anspruch 1 oder 2, **dadurch gekennzeichnet, dass** die Rufzone ein oder mehrere Zellen enthält, wobei die Zellen mit irgendeinem Zellabstand voneinander entfernt sind.

4.  Verfahren nach einem der vorherigen Ansprüche, **dadurch gekennzeichnet, dass** die Rufzone (PA) eine Untergruppe einer anderen Rufzone (PA) sein kann oder sich die Rufzonen überlappen können.

5.  Verfahren nach einem der vorherigen Ansprüche, **dadurch gekennzeichnet, dass** Zellen, die in einer speziellen Rufzone (PA) enthalten sein sollen, durch einen Bediener auf der Basis einer geographischen Unterteilung oder abhängig von der Verkehrsmenge in jeder Zelle bestimmt werden.

6.  Verfahren nach einem der vorherigen Ansprüche, **dadurch gekennzeichnet, dass** die Unterteilung des Routingbereichs in Rufzonen basiert sein kann auf

    (i) einer für jede mobile Station erfassten Statistik,
    (ii) unterschiedlichen Gruppierungen der mobilen Stationen oder
    (iii) aller mobilen Stationen innerhalb eines vorbestimmten Gebietes.

7.  Verfahren nach Anspruch 6, **dadurch gekennzeichnet, dass** die Unterteilung zeitabhängig ist, d.h., dass sie nach einer bestimmten Zeitperiode entsprechend einem Algorithmus verändert wird.

**Revendications**

1. Procédé dans un système de téléphonie mobile numérique cellulaire pour réduire la charge de signalisation lors de la localisation d'une station mobile dans une zone de routage (RA) au coût d'un retard à l'établissement d'une connexion de données, ledit système, de téléphonie mobile utilisant la technologie GPRS, **caractérisé en ce que** ladite zone de routage (RA) est divisée en un nombre quelconque de très petites zones de recherche (PA), et **en ce qu'**un message de recherche est transmis séquentiellement dans lesdites zones de recherche par une station de base commandée par la technologie GPRS jusqu'à, ce que ladite station mobile réponde audit message de recherche, ladite station de base commandée par la technologie GPRS recherchant de manière aléatoire dans des zones de recherche (PA) comprises dans ladite zone de routage (RA) de la station mobile.

2. Procédé selon la revendication 1,
   **caractérisé en ce que** la station de base (BSS), qui transmet ledit message de recherche, est commandée par un noeud GPRS (SGSN) pour utiliser le canal radio de manière plus efficace du fait que le noeud GPRS n'utilise que le canal radio lorsqu'il a des informations à transmettre.

3. Procédé selon la revendication 1 ou 2, **caractérisé en ce que** ladite zone de recherche comprend une ou plusieurs cellules, lesdites cellules étant placées à une distance de cellules quelconque les unes des autres.

4. Procédé selon l'une quelconque des revendications précédentes, **caractérisé en ce que** ladite zone de recherche (PA) peut être un sous-ensemble d'une autre zone de recherche (PA), ou bien **en ce que** lesdites zones de recherche peuvent se chevaucher les unes les autres.

5. Procédé selon l'une quelconque des revendications précédentes, **caractérisé en ce que** lesdites cellules, qui doivent être incluses dans la zone de recherche spécifique (PA), sont déterminées par un opérateur sur la base d'une répartition géographique, ou en fonction de la quantité de trafic dans chaque cellule.

6. Procédé selon l'une quelconque des revendications précédentes, **caractérisé en ce que** ladite division de la zone de routage en zones de recherche peut être fondée sur

   (i) des statistiques recueillies prises pour chaque station mobile,
   (ii) différents regroupements de stations mobiles, ou
   (iii) toutes les stations mobiles dans une zone prédéfinie.

7. Procédé selon la revendication 6, **caractérisé en ce que** ladite division dépend du temps, c'est-à-dire qu'elle est changée après un certain intervalle de temps conformément à un algorithme.

— Paging area

— Mobile

— Paging message

**Figure 1**

- - - - Location area

- - - - Location update message

Location register

**Figure 2**

**MM State Model of MS**          **MM State Model of SGSN**

# Figure 3

HLR

VLR

TE — ME — BSS — SGSN — GGSN — external packet data network TE

GGSN

*another PLMN*

TE    Terminal Equipment
ME    Mobile Equipment
BSS   Base Station System
SGSN  Service GPRS Support Node
GGSN  Gateway GPRS Support Node
MSC   Mobile Switching Centre
VLR   Visitor Location Register
HLR   Home Location Register

**Figure 4**

Routing area

PA1

PA2

PA3

PA1   Paging Area 1
PA2   Paging Area 2
PA3   Paging Area 3

**Figure 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5590398 A
- US 5548816 A
- WO 9724898 A1
- WO 9703529 A1
- WO 9407337 A1
- WO 9323965 A1
- WO 9737504 A
- WO 9601030 A